# EUROPEAN PATENT APPLICATION

(11) **EP 4 653 840 A1**
(43) Date of publication of application: **26.11.2025**
(21) Application number: 24744831.9
(22) Date of filing: 15.01.2024
(51) Int. Cl.: G01N 1/28, G01N 1/31, G01N 1/36, G01N 1/30

(54) **FIXATIVE COMPOSITION FOR PREPARING SMEAR SPECIMENS OF BIOLOGICAL SAMPLES**

(30) Priority: 16.01.2023 KR 20230006323; 15.05.2023 KR 20230062525
(71) Applicant: Noul Co., Ltd., Yongin-si, Gyeonggi-do 16942 (KR)
(72) Inventor: SONG, Young Hoon, Suwon-si, Gyeonggi-do 16514 (KR); HONG, Yoon Taik, Seoul 06310 (KR)
(74) Representative: Dantz, Jan Henning
(86) International application number: PCT/KR2024/000716
(87) International publication number: WO 2024/155051

(57) **Abstract**

The present disclosure relates to a fixative composition for preparing a biological sample smear. The fixative composition according to an aspect ensures that, in a solid-gel-based staining method, a biological sample is completely fixed onto a slide even after gel patch staining and an image of cells having clear boundaries without cell damage may be obtained. Accordingly, the fixative composition may be useful for smear examination of biological samples.

## Description

### Technical Field

The present disclosure relates to a fixative composition for preparing a biological sample smear.

### Background Art

A blood smear examination is a test method in which blood is smeared on a glass slide, fixed, and then stained to examine the number or morphological information of blood cells or to detect bacteria or parasites in the blood under a microscope. This test method is mainly used to detect infections from parasitic diseases such as malaria, blood tumors including leukemia, and congenital blood cell abnormalities.

Methanol has been commonly used as a fixative for producing blood smear specimens. However, in the case of methanol, when users are exposed to methanol vapor during the fixation process, acute poisoning and blindness may occur. Due to this toxicity, there is a need to develop alternatives. In addition, ethanol has been mainly used as a fixative in the field of cytology, and in general, ethanol is not used for fixing blood smeared samples.

In addition, in general, the staining process for a blood smear examination is performed using a liquid-based staining method in which a large amount of staining solution is poured onto a slide on which blood is fixed and stained. However, recently, a solid gel-based staining method and automated devices applying the same have been reported (Korean Patent Publication 10-2019-0130992), in which, in the solid gel-based staining method, a staining solution is stored in a patch-shaped gel and then stamped onto a slide on which blood is fixed, so as to release the stored staining solution into the blood. Meanwhile, in the case of a blood smear examination using such a solid gel-based staining method, in consideration that cells need to appear normal after fixation, fixation performance needs to withstand the physical stress applied during stamping of the gel patch, and in the solid gel-based staining method, a multiplex test using multiple gel patches on one sample is performed, fixation performance is a very important factor in the overall process, but research thereon is still insufficient.

### Disclosure

### Technical Problem

One aspect is to provide a fixative composition for preparing a biological sample smear, including an aqueous solution of C2-C6 alcohol and poly(vinylpyrrolidone)-iodine complex (PVP-I).

Another aspect is to provide a method of preparing a biological sample smear for a smear examination for a biological sample, the method including smearing a biological sample isolated from a subject onto a slide; fixing the biological sample smeared on the slide with the fixative composition; and staining the fixed biological sample by providing a staining reagent to the fixed biological sample.

Another aspect is to provide use of a fixative composition including an aqueous solution of C2-C6 alcohol and poly(vinylpyrrolidone)-iodine complex (PVP-I) for the preparation of a fixative for preparing a biological sample smear.

### Technical Solution

One aspect is to provide a fixative composition for preparing a biological sample smear, including an aqueous solution of C2-C6 alcohol and poly(vinylpyrrolidone)-iodine complex (PVP-I).

The term "biological sample smear" refers to a specimen prepared for microscopic observation of a biological sample isolated from a subject. In an embodiment, the biological sample may be blood.

The term "blood smear" may be used interchangeably with the term "peripheral blood smear" or the term "blood smear film," and may refer to a specimen for a peripheral blood smear examination, which is prepared such that the blood to be examined is spread (smeared) in the form of a thin layer on a slide and then fixed using a fixative, followed by staining with a staining reagent to allow various blood cells to be observed under a microscope.

The term "fixation" includes stopping cell function while preserving cell morphology as intact as possible and attaching cells onto a slide so that they do not detach during subsequent staining and washing processes. The term "Fixative" refers to a reagent that performs this fixation action. Conditions for suitable fixatives include any material that acts quickly and minimizes any secondary modifications or side effects that interfere with morphological analysis of cells. The fixative may be provided by immersing, in the fixative, the slide on which the biological sample is smeared or by spraying the fixative on the slide on which the biological sample is smeared. In an embodiment, the fixative can be provided through an automated staining device that sprays the fixative.

The term "aqueous solution of alcohol" includes pure alcohol or a mixture thereof mixed with water. The alcohol may be a compound of C2 to C6 having one or more -OH groups of, and examples thereof are ethanol, n-propanol, or isopropanol. In an embodiment, the alcohol may be ethanol. The alcohol concentration of the aqueous solution of alcohol may be 80 to 100 %(v/v), for example, 80 to 99 %(v/v), 80 to 97.5 %(v/v), 80 to 95 %(v/v), 85 to 100 %(v/v), 85 to 99 %(v/v), 85 to 97.5 %(v/v), 85 to 95 %(v/v), 87 to 100 % %(v/v), 87 to 99 %(v/v), 87 to 97.5 %(v/v), 87 to 95 %(v/v), 90 to 100 %(v/v), 90 to 99 %(v/v), 90 to 97.5 %(v/v), 90 to 95 %(v/v), 92.5 to 100 %(v/v), 92.5 to 99 %(v/v), 92.5 to 97.5 %(v/v), 92.5 to 95 %(v/v), 95 to 100 %(v/v), 95 to 99 %(v/v), or 95 to 97.5 %(v/v), or 90 to 100 %(v/v), 90 to 99 %(v/v), 90 to 97.5 %(v/v), 90 to 95 %(v/v), 92.5 to 100 %(v/v), 92.5 to 99 %(v/v), 92.5 to 97.5 %(v/v), 92.5 to 95 %(v/v), 95 to 100 %(v/v), 95 to 99 %(v/v), or 95 to 97.5 %(v/v). When the concentration of alcohol is greater than the upper limits of these ranges, in the case of a solid gel-based staining process in which a staining reagent is provided such that a gel patch containing a staining reagent is brought into contact with a sample, pressed, and then spaced apart to release the contact, blood may be released, and when the concentration of alcohol is smaller than the lower limits of these ranges, artifacts such as vacuoles may be created within the red blood cells. The concentration of the alcohol may be adjusted within these ranges according to the external temperature or humidity conditions under which the examination is performed. For example, when trying to diagnose malaria through a blood smear in a high-temperature climate such as in Africa, evaporation of alcohol components may be accelerated due to high external temperature. In this case, alcohol with a relatively high concentration within these ranges may be selected.

The term "Poly(vinylpyrrolidone)-iodine complex (PVP-I)" may be used interchangeably with the term "povidone-iodine," and refers to a complex having the structure of Formula 2 which is formed by adding polyvinylpyrrolidone (PVP, 1-ethenylpyrrolidin-2-one) to iodine. n and m in Formula 1 and Formula 2 are each an integer of 1 or more. PVP-I is mainly used as a sterilizing disinfectant to prevent and treat infection at wound sites, and may be commercially available in powder or solution form.

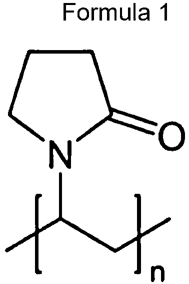

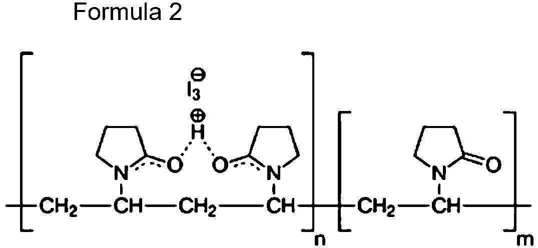

It was confirmed that the ethanol fixative composition according to one embodiment can effectively improve factors that interfere with morphological analysis, such as the appearance of cell membranes being connected between cells, by containing PVP-I as an additive. However, when PVP is included as an additive, this improvement effect did not occur. An ethanol fixative composition containing PVP-I according to an aspect may be useful as a hematological fixative composition that can preserve the morpohlogy of blood cells intact.

In an embodiment, the concentration of PVP-I may be, based on the total volume of the composition, 0.01 to 1.0 %(w/v), for example, 0.01 to 0.7 %(w/v), 0.01 to 0.5 %(w/v), 0.01 to 0.4 %(w/v), 0.01 to 0.35 %(w/v), 0.01 to 0.32 %(w/v), 0.01 to 0.3 %(w/v), 0.01 to 0.28 %(w/v), 0.01 to 0.24 %(w/v), 0.01 to 0.2 %(w/v), 0.01 to 0.16 %(w/v), 0.01 to 0.14 %(w/v), 0.01 to 0.12 %(w/v), 0.01 to 0.1 %(w/v), 0.01 to 0.09 %(w/v), 0.01 to 0.08 %(w/v), 0.04 to 1.0 %(w/v), 0.04 to 0.7 %(w/v), 0.04 to 0.5 %(w/v), 0.04 to 0.4 %(w/v), 0.04 to 0.35 %(w/v), 0.04 to 0.32 %(w/v), 0.04 to 0.3 %(w/v), 0.04 to 0.28 %(w/v), 0.04 to 0.24 %(w/v), 0.04 to 0.2 %(w/v), 0.04 to 0.16 %(w/v), 0.04 to 0.14 %(w/v), 0.04 to 0.12 %(w/v), 0.04 to 0.1 %(w/v), 0.04 to 0.09 %(w/v), 0.04 to 0.08 %(w/v), 0.05 to 1.0 %(w/v), 0.05 to 0.7 %(w/v), 0.05 to 0.5 %(w/v), 0.05 to 0.4 %(w/v), 0.05 to 0.35 %(w/v), 0.05 to 0.32 %(w/v), 0.05 to 0.3 %(w/v), 0.05 to 0.28 %(w/v), 0.05 to 0.24(w/v), 0.05 to 0.2 %(w/v), 0.05 to 0.16 %(w/v), 0.05 to 0.14 %(w/v), 0.05 to 0.12 %(w/v), 0.05 to 0.1 %(w/v), 0.05 to 0.09 %(w/v), 0.05 to 0.08 %(w/v), 0.06 to 1.0 %(w/v), 0.06 to 0.7 %(w/v), 0.06 to 0.5 %(w/v), 0.06 to 0.4 %(w/v), 0.06 to 0.35 %(w/v), 0.06 to 0.32 %(w/v), 0.06 to 0.3 %(w/v), 0.06 to 0.28 %(w/v), 0.06 to 0.24(w/v), 0.06 to 0.2 %(w/v), 0.06 to 0.16 %(w/v), 0.06 to 0.14 %(w/v), 0.06 to 0.12 %(w/v), 0.06 to 0.1 %(w/v), 0.06 to 0.09 %(w/v), or 0.06 to 0.08 %(w/v). When the concentration of PVP-I is greater than upper limits of these ranges, the dyeing properties may be affected or foreign substances may appear due to residues of PVP-I, and affinity may occur between hydrogel patches that come into contact with PVP-I during the solid gel-based staining process, thereby causing the blood to be separated. When the concentration of PVP-I is smaller than the lower limits of these ranges, the effect of PVP-I on improving the cell membrane connection phenomenon may be weak.

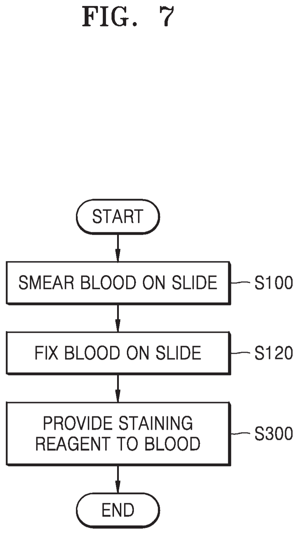

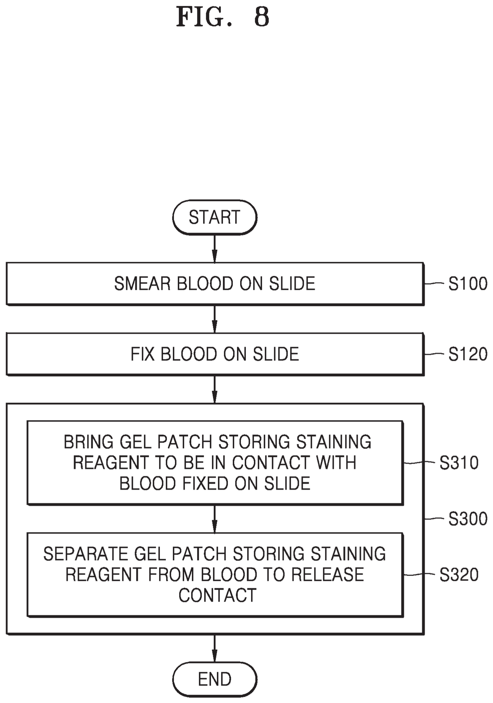

The term "blood smear examination" can be used interchangeably with "peripheral blood smear examination," and as illustrated in FIG. 7, refers to performing a microscopic examination using a blood smear prepared by smearing, fixing, and staining. In this regard, in general, a staining operation (S300) may be a liquid-based staining method in which a large amount of staining solution is poured onto a slide on which blood has been fixed, and then a washing solution is poured thereon to wash out to remove excess residual staining solution. Alternatively, the staining may be, as shown in FIG. 8, a solid gel-based staining method in which a staining solution is stored in a patch-shaped gel and the staining solution is provided to the blood by stamping the surface of this gel onto the surface of a slide on which blood has been fixed (S310, S320). The term "patch" refers to a pillar shape with a thickness equal to the distance between a first surface and a second surface, and either the first surface or the second surface may be used as a contact surface that is to be in contact with the slide.

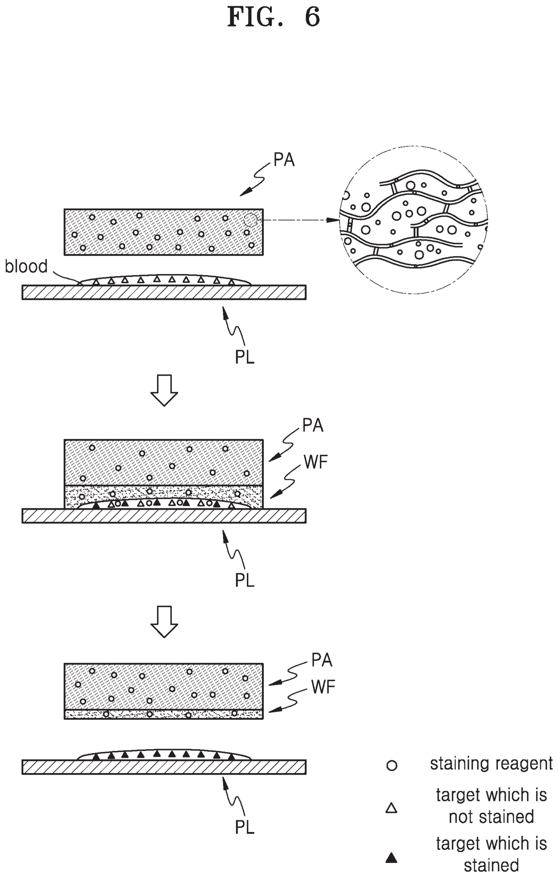

The term "solid gel-based staining method" refers to such a staining method that a liquid staining reagent is stored in a cavity inside a solid gel with a three-dimensional network structure, and then, due to external pressure applied to the gel, the stored staining reagent is released and delivered to the sample. Referring to FIG. 6, the solid gel-based staining method is performed in such a manner that a gel patch PA storing a staining reagent that is spaced a certain distance or more from the top portion of a blood sample fixed on a slide PL is pressed downward until being in contact with the blood sample, to release the staining reagent stored inside into the blood sample, and the excess remaining staining reagent, which acts as noise and interferes with detection, is reabsorbed into the gel patch PA by removing the pressure applied to the gel patch PA when lifted upward again. When the gel patch PA is brought into contact with the slide PL, a water film WF may be formed near the contact area, and when the gel patch is lifted upward, the water film WF may be moved along with the gel patch. This solid gel-based staining method even allows reabsorption of excess residual staining reagent when lifting the gel patch without the need for a separate washing and subsequent drying process that involves rinsing the slide by pouring a large amount of washing solution. Accordingly, it can be said that solid gel-based staining method is a method that accurately, quickly performs a blood smear examination.

The fixative composition may be suitable for use in the solid-gel based staining method or an apparatus for performing the same, disclosed in US 16/079,271 filed on August 23, 2018, PCT/KR2017/002030 filed on February 23, 2017, US 15/206,247 filed on July 9, 2016. US 16/079,485 filed on August 23, PCT/KR2017/002032 filed on February 23, 2017, etc.

Another aspect is to provide a method of preparing a biological sample smear for a biological sample smear examination, the method including: smearing a biological sample isolated from a subject onto a slide; fixing the biological sample smeared on the slide with the fixative composition; and staining the fixed biological sample by providing a staining reagent thereto. In the method, the biological sample, the fixative composition, the fixation, and the biological sample smear are as described above.

The subject may be a mammal, such as a human, cow, horse, pig, dog, sheep, goat, or cat.

Since the fixative composition according to one aspect can significantly shorten the incubation time for the fixing, in an embodiment, the fixing may be performed by incubating for 10 seconds to 5 minutes, for example, 10 seconds to 2 minutes, or 10 seconds to 90 seconds, after spraying or contacting the fixative composition on the slide on which the biological sample is smeared.

In an embodiment, the staining may include pressing the gel patch including the staining reagent such that the gel patch is to be in contact with the biological sample fixed on the slide to release the staining reagent, and separating the gel patch storing the staining reagent from the biological sample to release the contact. In other words, the staining may involve staining a biological sample using the solid-gel-based staining method.

The term "staining reagent" may be used interchangeably with the term "staining solution," and when the biological sample is blood, the staining reagent may include carmine acetate, methylene blue, toluidine blue, Azure blue, hemotoxylin, eosin, acid fuchsin, orange G, crystal violet, safranin, Janus green B, Giemsa's solution, Wright's solution, Wright-Gimsa's solution, Leishman's stain, Gram's stain, carbolfuchsin, or Ziehl's solution.

In an embodiment, the gel may be a hydrogel.

Another aspect is to provide use of a fixative composition including an aqueous C2-C6 alcohol solution and poly(vinylpyrrolidone)-iodine complex (PVP-I), for the preparation of a fixative for preparing a biological sample smear. Regarding the use, the biological sample, the aqueous C2-C6 alcohol solution, the poly(vinylpyrrolidone)-iodine complex (PVP-I), the fixative composition, fixation, and the biological sample smear are as described above.

### Advantageous Effects

When the fixative composition according to an aspect is used, in a solid gel-based staining method, a biological sample is completely fixed on a slide even after gel patch staining and cell images with clear boundaries can be obtained without cell damage. Accordingly, the fixative composition can be useful for a smear examination of biological samples.

### Description of Drawings

FIG. 1A shows microscope images of cells after smearing/fixing for a blood smear examination by using, as a fixative, 70 %(v/v), 80 %(v/v), 90 %(v/v), 95 %(v/v) and 100 %(v/v) ethanol of Comparative Examples 1-1 to 1-5.
FIG. 1B shows microscope images of cells after smearing/fixing/solid-gel-based staining for a blood smear examination by using, as a fixative, 70 %(v/v), 80 %(v/v), 90 %(v/v), 95 %(v/v) and 100 %(v/v) ethanol of Comparative Examples 1-1 to 1-5.
FIG. 2A shows microscope images of cells after smearing/fixing for a blood smear examination by using, as a fixative, 100 %(v/v) ethanol (Comparative Example 1-5), a solution in which polyvinylpyrrolidone-I (PVP-I) was added to 100 %(v/v) ethanol (Example 1), and a solution in which polyvinylpyrrolidone (PVP) was added to 100 %(v/v) ethanol (Comparative Example 2).
FIG. 2B shows microscope images of cells after smearing/fixing/solid-gel-based staining for a blood smear examination by using, as a fixative, 100 %(v/v) ethanol (Comparative Example 1-5) and a solution in which polyvinylpyrrolidone-I (PVP-I) was added to 100 %(v/v) ethanol (Example 1).
FIG. 3A shows images of cells, which were visually identified, after smearing/fixing/solid-gel-based staining for a blood smear examination by using, as a fixative, a solution in which 0.08 %(w/v) polyvinylpyrrolidone-I (PVP-I) was added to a 95 %(v/v) ethanol solvent (Example 2) and 0.04 %(w/v) PVP-I and 0.08 %(w/v) PVP-I were each added to a PBS solvent (Comparative Examples 3-1 and 3-2), and FIG. 3B shows microscope images of the cells.
FIG. 4A shows microscope images of cells after smearing/fixing/solid-gel-based staining for a blood smear examination by using fixatives in which 0.04 % to 0.48 %(w/v) PVP-I was added to 95 %(v/v) ethanol, FIG. 4B shows an image thereof, magnified at 400 X, and FIG. 4C shows visually identified images thereof.
FIG. 5 shows microscope images of cells after smearing/fixing/solid-gel-based staining for a blood smear examination by using, as a fixative, a solution in which 0.08 %(w/v) PVP-I was added to 90 %(v/v) ethanol (Example 3) and a solution in which 0.08 %(w/v) PVP-I was added to 95 %(v/v) ethanol (Example 2).
FIG. 6 is a diagram for explaining a solid-gel-based staining method.
FIG. 7 is a flowchart for explaining a method of preparing a blood smear.
FIG. 8 is a flowchart for explaining a method of preparing a blood smear by using a solid-gel-based staining method.

### Best Mode

### Mode for Invention

Hereinafter, the present disclosure will be described in more detail through examples. However, these examples are for illustrative purposes only and the scope of the present disclosure is not limited to these examples.

### [Examples]

### Examples 1 to 3. Preparation of ethanol fixative composition containing PVP-I

A fixative composition was prepared in which PVP-I was added to an ethanol solvent. Specifically, 1900 mL of ethyl alcohol (Duksan Science Co., Ltd.) was placed in a 2 L reagent bottle, then 100 mL of water (Merck Milli-Q Direct 8, ultrapure water) was added thereto and stirred at 600 rpm for 10 minutes. Afterwards, 1.6 g of poly(vinylpyrrolidone)-iodine complex (Sigma-Aldrich, PVP1-100G) (PVP-I) was added to the previously prepared 2 L reagent bottle, and sufficiently stirred at 600 rpm for 10 minutes to ensure that no undissolved lumps were visible to the naked eye to obtain a fixative composition including such a final concentration of 95 %(v/v) ethanol and 0.08 %(w/v) PVP-I (Example 2). In addition, PVP-I-containing ethanol fixative compositions of Examples 1 and 3 in Table 1 below were prepared in the same manner as described above except for the ethanol concentration.

### [Preparation Examples]

### Preparation Examples 2-1 to 2-10. Preparation of ethanol fixative compositions according to PVP-I concentration

Ethanol fixative compositions of Preparation Examples 2-1 to 2-10 shown in Table 1 were prepared in the same manner as in Example above, except that the PVP-I concentration of the 95 %(v/v) ethanol fixative composition of Example 2 was varied.

### [Comparative Examples]

### Comparative Examples 1-1 to 1-5. Preparation of Ethanol Fixative Composition

An ethanol fixative composition containing no additional additives was prepared. Specifically, ethanol fixative compositions having the concentrations of Comparative Examples 1-1 to 1-5 in Table 1 below were prepared in the same manner as in Example above, except that PVP-I was not added.

### Comparative Example 2. Preparation of PVP-containing ethanol fixative composition

A fixative composition containing PVP added to an ethanol solvent was prepared. Specifically, an ethanol fixative composition including PVP having the concentration shown in Comparative Example in Table 1 was prepared in the same manner as Example above, except that polyvinylpyrrolidone (PVP) (Sigma-Aldrich) was used instead of PVP-I in Example above.

### Comparative Example 3. Preparation of PBS fixative composition containing PVP-I

A fixative composition was prepared in which PVP-I was added to a phosphate-buffered saline solvent. Specifically, a PBS fixative composition including the concentration of Comparative Example 3 shown in Table 1 was prepared in the same manner as in Example above, except that PBS (Sigma-Aldrich) was used instead of the ethanol solvent.

**Table 1**

| | **Base solution** | **Additive** |
|---|---|---|
| **Comparative Example 1-1** | 70 %(v/v) EtOH | - |
| **Comparative Example 1-2** | 80 %(v/v) EtOH | - |
| **Comparative Example 1-3** | 90 %(v/v) EtOH | - |
| **Comparative Example 1-4** | 95 %(v/v) EtOH | - |
| **Comparative Example 1-5** | 100 %(v/v) EtOH | - |
| **Comparative Example 2** | 100 %(v/v) EtOH | 0.08 %(w/v) PVP |
| **Example 1** | 100 %(v/v) EtOH | 0.08 %(w/v) PVP-I |
| **Comparative Example 3-1** | PBS | 0.08 %(w/v) PVP-I |
| **Comparative Example 3-2** | PBS | 0.04 %(w/v) PVP-I |
| **Example 2** | 95 %(v/v) EtOH | 0.08 %(w/v) PVP-I |
| **Preparation Example 2-1** | 95 %(v/v) EtOH | 0.04 %(w/v) PVP-I |
| **Preparation Example 2-2** | 95 %(v/v) EtOH | 0.06 %(w/v) PVP-I |
| **Preparation Example 2-3** | 95 %(v/v) EtOH | 0.08 %(w/v) PVP-I |
| **Preparation Example 2-4** | 95 %(v/v) EtOH | 0.1 %(w/v) PVP-I |
| **Preparation Example 2-5** | 95 %(v/v) EtOH | 0.12 %(w/v) PVP-I |
| **Preparation Example 2-6** | 95 %(v/v) EtOH | 0.16 %(w/v) PVP-I |
| **Preparation Example 2-7** | 95 %(v/v) EtOH | 0.24 %(w/v) PVP-I |
| **Preparation Example 2-8** | 95 %(v/v) EtOH | 0.32 %(w/v) PVP-I |
| **Preparation Example 2-9** | 95 %(v/v) EtOH | 0.4 %(w/v) PVP-I |
| **Preparation Example 2-10** | 95 %(v/v) EtOH | 0.48 %(w/v) PVP-I |
| **Example 3** | 90 %(v/v) EtOH | 0.08 %(w/v) PVP-I |

### [Experimental Examples]

### Experimental Example 1. Cell morphology evaluation according to concentration of ethanol fixative

Comparative evaluation was performed for the state of cell morphology of the blood smear which had been fixed using 70 %(v/v) ethanol, 80 %(v/v) ethanol, 90 %(v/v) ethanol, 95 %(v/v) ethanol, and 100 %(v/v) ethanol (Comparative Examples 1-1 to 1-5) to prepare ethanol-based fixative compositions.

### (1.1) Evaluation of cell morphology after smearing/fixation

First, the smearing/fixing process was performed using ethanol at respective concentrations of Comparative Examples 1-1 to 1-5, and then the morphology of the cells was analyzed.

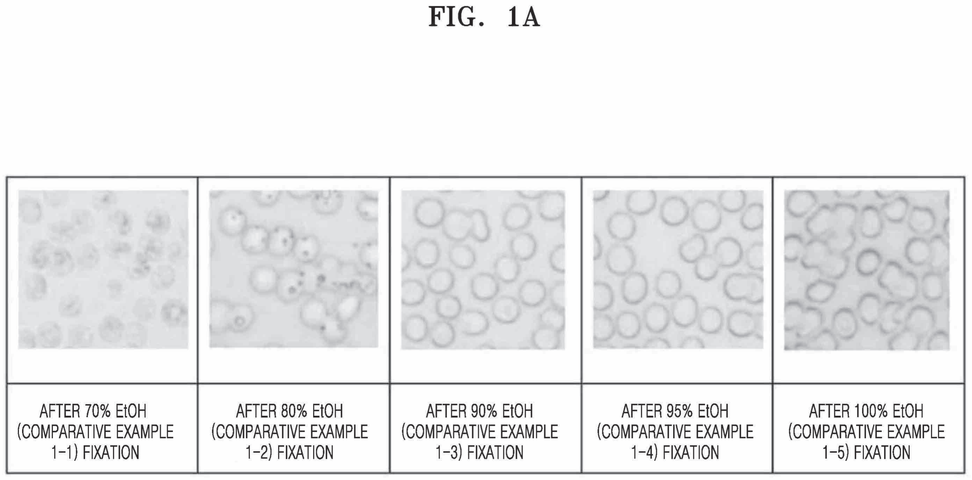

Specifically, blood samples collected from the human body were smeared on each glass slide and the slides were dried. 70 %(v/v) ethanol, 80 %(v/v) ethanol, 90 %(v/v) ethanol, 95 %(v/v) ethanol, and 100 %(v/v) ethanol of Comparative Examples 1-1 to 1-5 were dropped on the blood sample, which was then fixed by incubation for 90 seconds, and then dried, and the morphology of the cells was analyzed by using an optical microscope CX-33. FIG. 1A shows microscope images of cells after smearing/fixing for a blood smear examination by using, as a fixative, 70 %(v/v) ethanol, 80 %(v/v) ethanol, 90 %(v/v) ethanol, 95 %(v/v) ethanol, and 100 %(v/v) ethanol of Comparative Examples 1-1 to 1-5.

As a result, as shown in FIG. 1A, when fixed with 70 %(v/v) ethanol, not only was the shape of the cells significantly damaged, but also many vacuoles were identified within the red blood cells, and even when fixed with 80 %(v/v) ethanol, although the cell shape was relatively maintained, many vacuoles were still identified within the red blood cells. When fixed with 90 %(v/v) ethanol, no vacuoles (water spots) were identified within the red blood cells, and the red blood cells were identified to be round and intact, and even in the case of 95 %(v/v) ethanol, similar results were obtained. However, in the case of 100 %(v/v) ethanol, the cell membrane of red blood cells was damaged, and the cell membrane between cells appeared to be connected.

### (1.2) Evaluation of cell morphology after smearing/fixing/solid-gel based staining

Unlike a liquid-based staining method in which a staining reagent was poured onto a slide glass on which a blood sample was smeared and fixed to perform staining the same, in the case of a solid gel-based staining method in which a staining reagent is provided such that a hydrogel patch storing the staining reagent is stamped (pressed) on a slide glass on which the blood sample is smeared and fixed, cells are required to appear normal without being damaged after not only fixation, but the subsequent process of stamping (pressing) the hydrogel patch on the slide glass on which the blood sample is placed. Accordingly, the state of cells after the full process up to the solid gel-based staining using ethanol at respective concentrations of Comparative Examples 1-1 to 1-5, was analyzed.

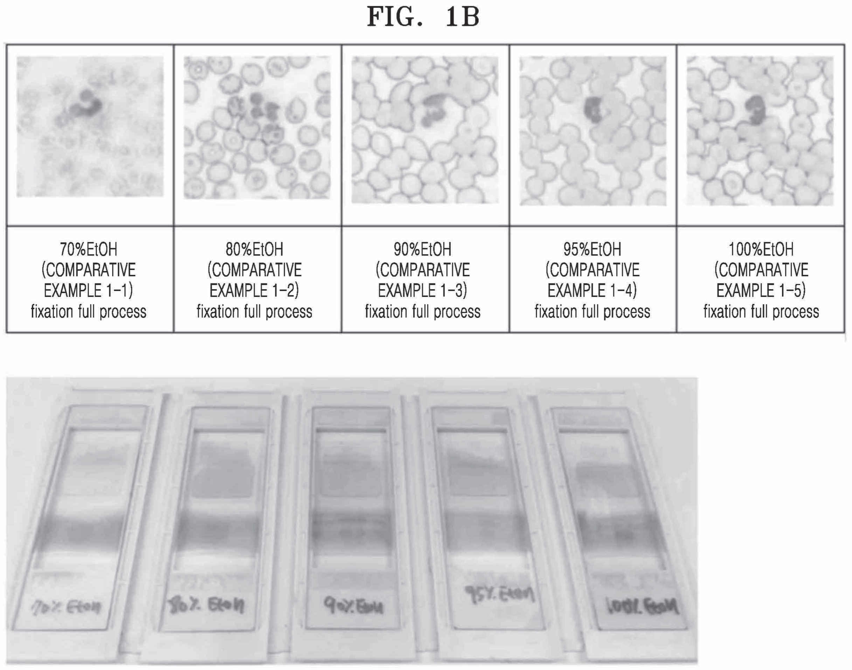

Specifically, the full process of smearing/fixing/solid-gel based staining was performed using the 70 %(v/v), 80 %(v/v), 90 %(v/v), 95 %(v/v), and 100 %(v/) ethanol fixatives of Comparative Examples 1-1 to 1-5. Then, a comparative evaluation was performed for the state of cells attached on the slide and the state of morphology of the cells. This experiment was performed using an automated staining device (Noeul Co., Ltd., miLab) that performs smearing/fixing/solid-gel based staining. The smearing/fixing process was carried out under the same conditions as (1.1) above, and the solid-gel based staining process was performed using a hydrogel patch storing Eosin and methylene blue, which are commonly used in blood smear examinations. FIG. 1B shows microscope images of cells after smearing/fixing/solid-gel based staining for a blood smear examination by using, as a fixative, 70 %(v/v) ethanol, 80 %(v/v) ethanol, 90 %(v/v) ethanol, 95 %(v/v) ethanol, and 100 %(v/v) ethanol of Comparative Examples 1-1 to 1-5.

As a result, as shown in FIG. 1B, when the full process up to the solid gel-based staining was performed using 70 %(v/v) ethanol as a fixative, the shape of the cells were more damaged than when only the process up to the fixing was performed, and many vacuoles were identified. Even when fixed with 80 %(v/v) ethanol, many vacuoles were still identified within the red blood cells. When fixed with 90 %(v/v) ethanol, vacuoles were not identified within the red blood cells, but the shape of the red blood cells was often changed and the cell membrane continued to appear blurred. Even in the case of 95 %(v/v) ethanol, similar results were obtained. In addition, even in the case of 100 %(v/v) ethanol, damage to the cell membrane of red blood cells and the phenomenon of cell membrane appearing connected were identified, and when stamping was performed using a hydrogel patch storing the staining reagent, blood was often leaked out together.

When diagnosing parasites, such as malaria, through a blood smear examination, vacuoles in red blood cells are fatal. Accordingly, follow-up experiments were conducted based on the ethanol concentration condition of 90 %(v/v) or more.

### Experimental Example 2. Cell morphology evaluation according to additives in fixative

In the case of 90 %(v/v) or more of ethanol in Experimental Example 1, no fatal problems such as formation of vacuoles in red blood cells occurred, but when the full process up to the solid gel-based staining was performed, the cell membranes appeared to be connected, resulting in low resolution. Accordingly, additives were used to identify whether this can be improved. For this purpose, 100 %(v/v) ethanol, in which case the connection of cell membrane occurred in (1.1) and (1.2) of Experimental Example 1, was used to evaluate whether the low resolution can be addressed depending on the type of additive.

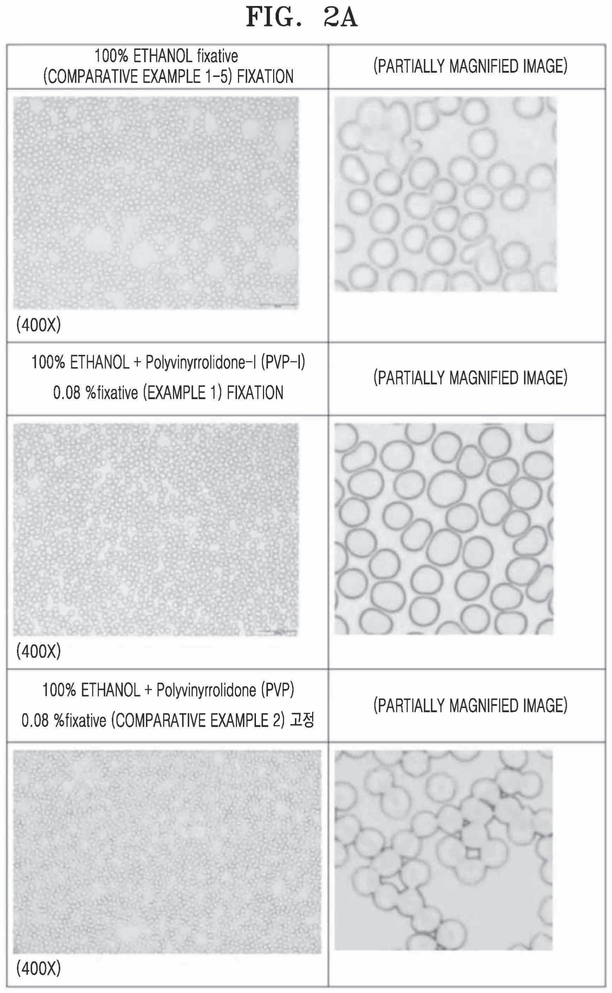

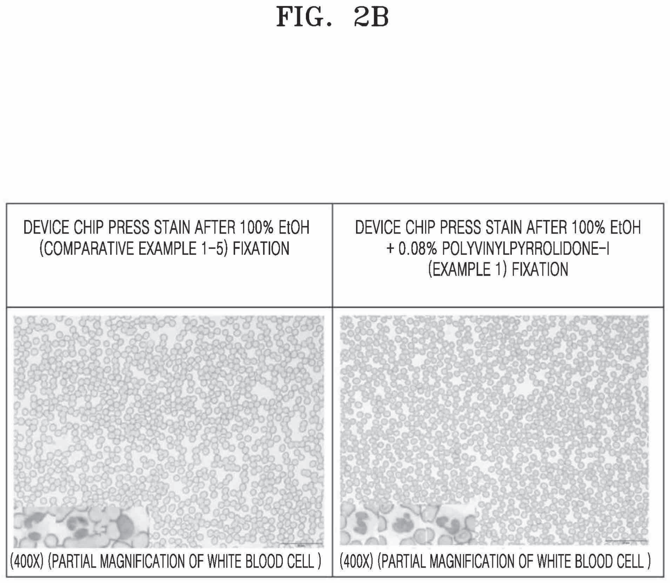

Specifically, the morphology of cells after smear/fixation of the blood smear examination and the morphology of cells after smearing/fixing/solid-gel based staining were analyzed by performing an experiment in the same manner as (1.2) of Experimental Example 1, except that the ethanol fixative of Comparative Examples 1-5, the PVP-containing ethanol fixative of Comparative Example 2, and the PVP-I-containing ethanol fixative of Example 1 were used as fixatives, and to select a fixative that is able to address the issue of low resolution and at the same time to shorten the incubation time after fixation, the incubation time after fixation was shortened from 90 seconds to 30 seconds. FIG. 2A shows microscope images of cells after smearing/fixing for a blood smear examination by using, as a fixative, 100 %(v/v) ethanol (Comparative Example 1-5), a solution in which polyvinylpyrrolidone-I (PVP-I) was added to 100 %(v/v) ethanol (Example 1), and a solution in which polyvinylpyrrolidone (PVP) was added to 100 %(v/v) ethanol (Comparative Example 2). FIG. 2B shows microscope images of cells after smearing/fixing/solid-gel based staining for a blood smear examination by using, as a fixative, 100 %(v/v) ethanol (Comparative Example 1-5) and a solution in which polyvinylpyrrolidone-I (PVP-I) was added to 100 %(v/v) ethanol (Example 1).

As a result, as shown in FIG. 2A, when the cells were fixed using only ethanol of Comparative Examples 1-5, the cell membrane connection occurred, but in Example 1 using the PVP-I additive, the blurring of the boundaries between cells clearly less occurred. In contrast, in the case of Comparative Example 2 using PVP as an additive, no such improvement effect was observed. In addition, as shown in FIG. 2B, the fixative of Example 1 using a PVP-I additive did not cause the cell membrane connection even when the full process up to the solid gel-based staining was performed and the image of clearly distinguishable cells was able to be obtained. This result indicates that when a small amount of PVP-I is added to the ethanol fixative, the boundaries between cells appear to become clearer through the action of PVP-I coating the outer layer of red blood cells, and that this improvement effect is particularly caused by iodine.

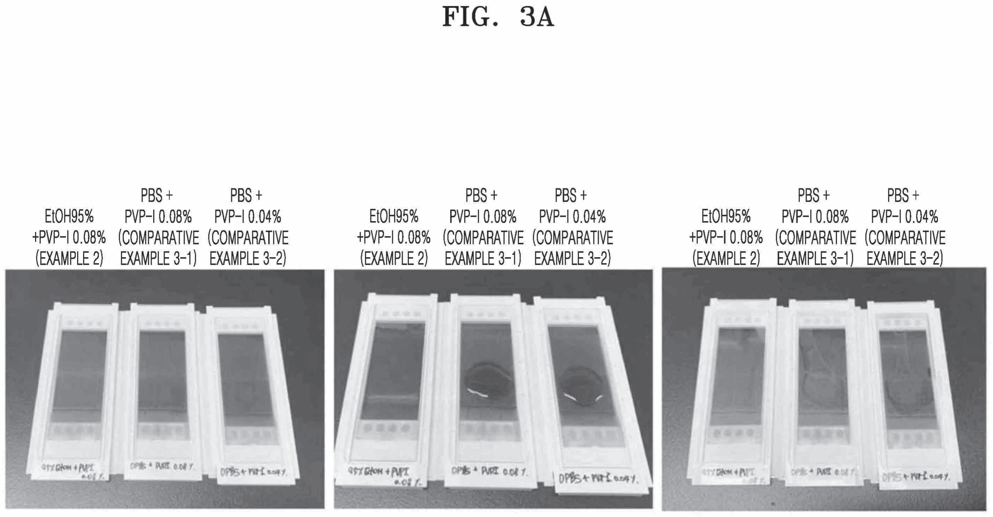

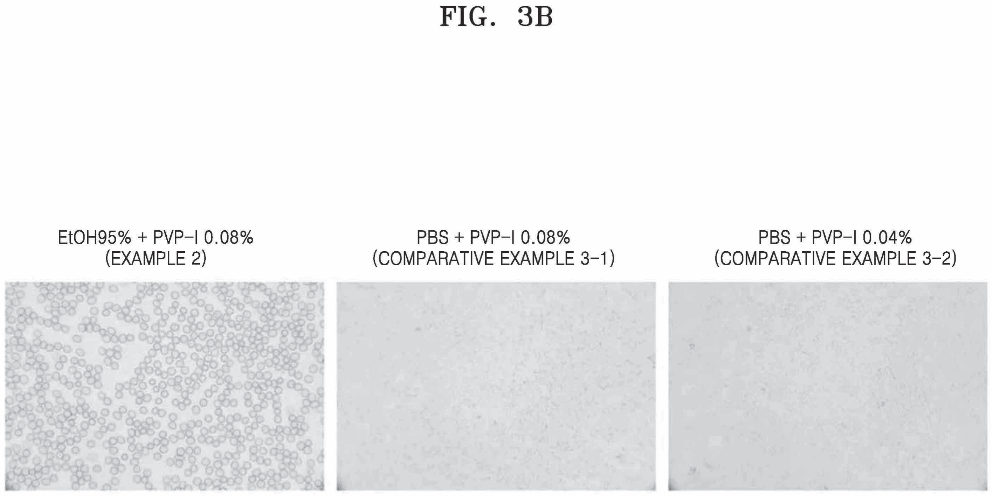

In addition, in order to confirm whether such high-resolution cell images can be obtained even in fixatives containing PVP-I in solvents other than ethanol solvents, the state of the cells after performing the smearing/fixing/solid-gel based staining of the blood smear examination was analyzed by performing the experiment in the same manner as (1.2) of Experimental Example 1, except that a PBS solvent based PVP-I containing fixatives of Comparative Example 3-1 and Comparative Example 3-2 and the PVP-I-containing fixative based on the ethanol solvent of Example 2 were used. FIG. 3A shows images of cells, which were visually identified, after smearing/fixing/solid-gel based staining for a blood smear examination by using, as a fixative, a solution in which 0.08 %(w/v) polyvinylpyrrolidone-I (PVP-I) was added to a 95 %(v/v) ethanol solvent (Example 2) and 0.04 %(w/v) PVP-I and 0.08 %(w/v) PVP-I was added to a PBS solvent (Comparative Example 3-1 and Comparative Example 3-2), and FIG. 3B shows microscope images of the cells.

As a result, as shown in FIGS. 3A and 3B, unlike the PVP-I containing fixative using an ethanol solvent, in the case of the fixatives of Comparative Examples 3-1 and 3-2 that did not use an ethanol solvent even though PVP-I was included, it was observed that the blood was separated by the stamping of the hydrogel patch, leaving only a mark thereof. This result indicates that when an ethanol solvent is not used and blood is fixed using a fixative, cell adhesion to the glass slide is significantly reduced regardless of the concentration of PVP-I.

### Experimental Example 3. Evaluation of cell morphology according to the concentration of additive (PVP-I) in fixative

Based on the results confirmed in Experimental Example 2, the PVP-I concentration of the ethanol fixative containing PVP-I was varied and the resulting effect on cell morphology was analyzed.

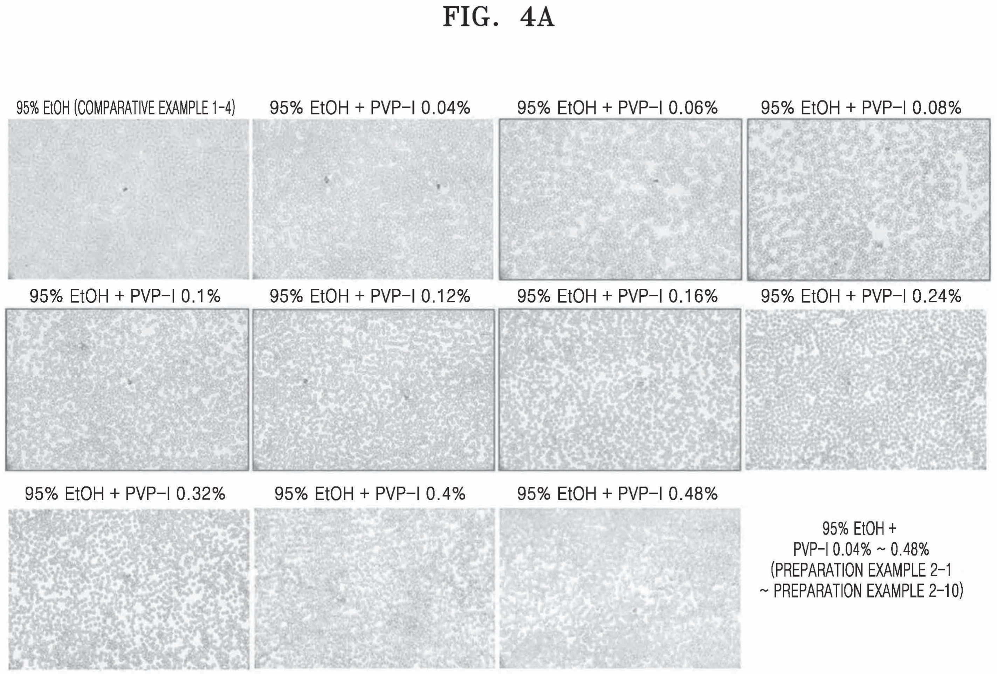

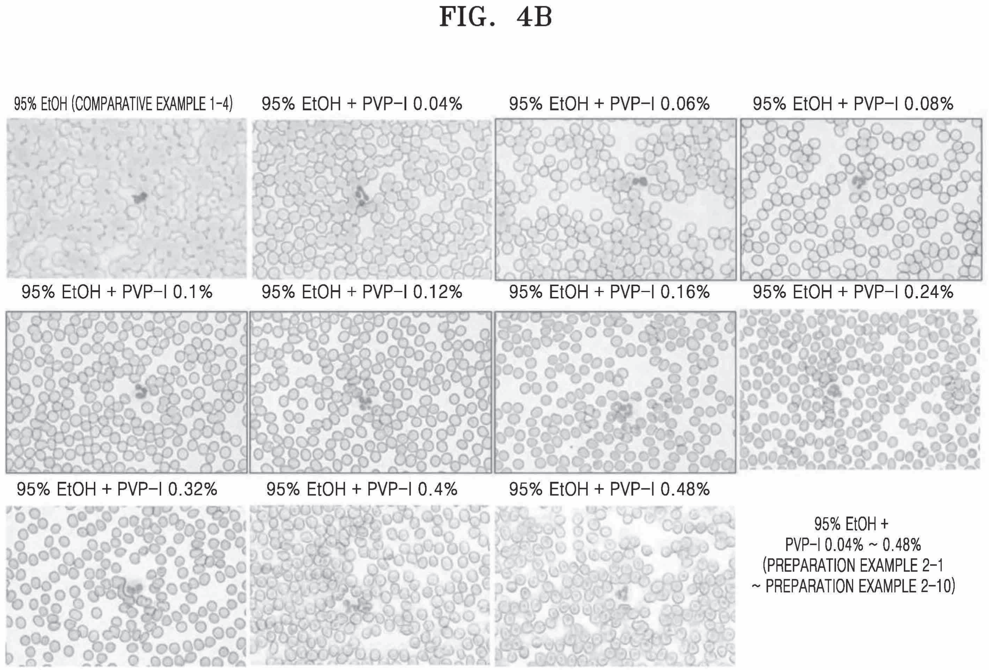

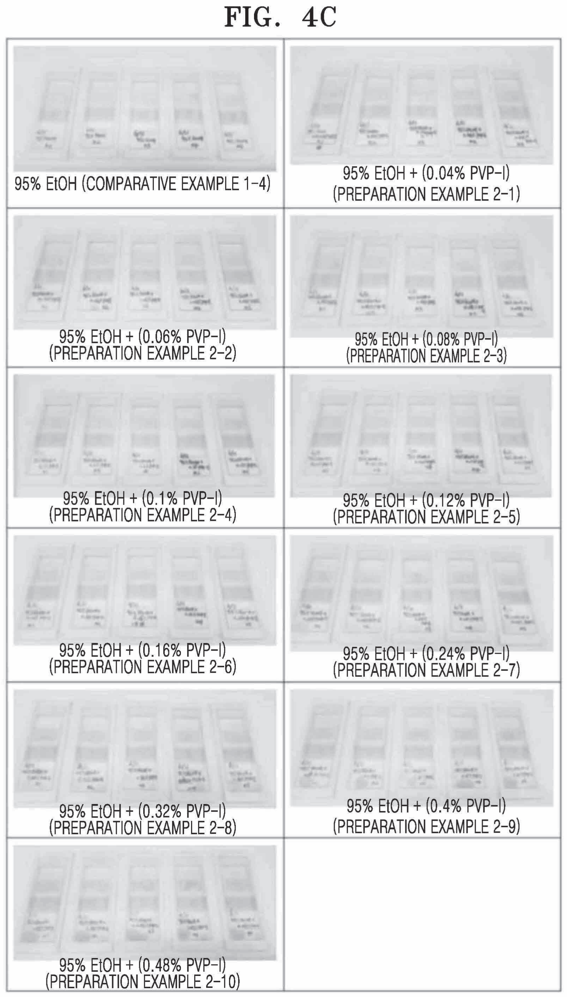

Specifically, the morphology of cells after smearing/fixing/solid-gel based staining of the blood smear examination was analyzed in the same manner as (1.2) of Experimental Example 1, except that, as a fixative, the ethanol fixatives having various concentrations of PVP-I of Preparation Examples 2-1 to 2-10 in which PVP-I was added in concentrations of 0.04 %(w/v), 0.06 %(w/v), 0.08 %(w/v), 0.1 %(w/v), 0.12 %(w/v), 0.16 %(w/v), 0.24 %(w/v), 0.32 %(w/v), 0.4 %(w/v), and 0.48 %(w/v) to 95 %(v/v) ethanol. FIG. 4A shows microscope images of cells after smearing/fixing/solid-gel based staining for a blood smear examination by using fixatives in which 0.04 % to 0.48 %(w/v) PVP-I was added to 95 %(v/v) ethanol, FIG. 4B shows an image thereof, magnified at 400 X, and FIG. 4C shows visually identified images thereof.

As a result, as shown in FIGS. 4A to 4C, in the case of PVP-I in the concentration of 0.04 %(w/v) or less, there were areas where the cell membrane was continuous and the boundary was unclear, and in the case of PVP-I in the concentration of 0.24 %(w/v) or more, it was confirmed that the color of the red blood cell stained became noticeably pinky due to the PVP-I residue. In addition, in the case of PVP-I in the concentration of 0.4 %(w/v) or more, foreign substances covering red blood cells begin to appear and white blood cell appears to be less stained, and affinity develops between patches which come into contact with the coating PVP-I, thereby causing the blood to be separated.

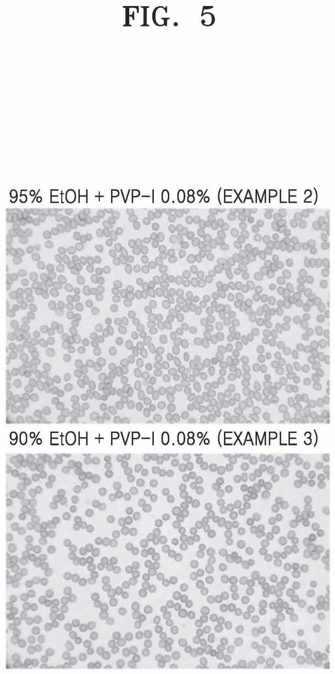

Likewise, the cell state was evaluated when the full process of the smearing/fixing/solid-gel based staining of the blood smear examination was performed using a fixative in which PVP-I was added in the concentration of 0.08 %(w/v) to 90 %(v/v) ethanol. FIG. 5 shows microscope images of cells after smearing/fixing/solid-gel based staining for a blood smear examination by using, as a fixative, a solution in which 0.08 %(w/v) PVP-I was added to 90 %(v/v) ethanol (Example 3) and a solution in which 0.08 %(w/v) PVP-I was added to 95 %(v/v) ethanol (Example 2).

As a result, as shown in FIG. 5, even in a solution containing PVP-I having been added to 90 %(v/v) ethanol, as a level similar to the solution containing PVP-I having been added to 95 %(v/v) ethanol, the image of cells having clear boundaries therebetween was able to be obtained. Accordingly, it was confirmed that the suitable concentration of ethanol to which PVP-I was added was more than 90 %(v/v).

### Explanation of Reference Numerals Designating the Major Elements of the Drawings

PA: Patch
PL: Slide
WF: Water film

## Claims

1. A fixative composition for preparing a biological sample smear, comprising: an aqueous solution of a C2-C6 alcohol; and poly(vinylpyrrolidone)-iodine complex (PVP-I).

2. The fixative composition of claim 1, wherein the C2-C6 alcohol is ethanol, n-propanol, or isopropanol.

3. The fixative composition of claim 1, wherein a concentration of the alcohol aqueous solution is 80 to 100 %(v/v).

4. The fixative composition of claim 1, wherein a concentration of the PVP-I is 0.01 to 1.0 %(w/v).

5. The fixative composition of claim 1, wherein the biological sample is blood.

6. A method of preparing a biological sample smear for smear examination of a biological sample, the method comprising:
smearing a biological sample isolated from a subject onto a slide;
fixing the biological sample smeared on the slide with the fixative composition of any one of claims 1 to 5; and
staining the fixed biological sample by providing a staining reagent to the fixed biological sample.

7. The method of claim 6, wherein the staining comprises:
pressing a gel patch including the staining reagent so that the gel patch comes into contact with the biological sample fixed on the slide to release the staining reagent; and
separating the gel patch storing the staining reagent from the biological sample to release the contact.

8. The method of claim 7, wherein the gel is a hydrogel.

9. Use of a fixative composition comprising an aqueous solution of C2-C6 alcohol and poly(vinylpyrrolidone)-iodine complex (PVP-I), for the preparation of a fixative for preparing a biological sample smear.
